# EUROPEAN PATENT SPECIFICATION

(11) **EP 2 541 575 B1**
(45) Date of publication and mention of the grant of the patent: **16.01.2019**
(21) Application number: 11828497.5
(22) Date of filing: 17.03.2011
(51) Int. Cl.: H01H 35/00, G02B 7/02

(54) **METHOD FOR FIXING LENS SECTION IN OPTICAL SENSOR AND OPTICAL SENSOR**
VERFAHREN ZUR BEFESTIGUNG EINES LINSENABSCHNITTS IN EINEM OPTISCHEN SENSOR UND OPTISCHER SENSOR
PROCÉDÉ DE FIXATION DE SECTION LENTILLE DANS UN CAPTEUR OPTIQUE ET CAPTEUR OPTIQUE

(30) Priority: 30.09.2010 JP 2010220778
(43) Date of publication of application: 02.01.2013
(73) Proprietor: Omron Corporation, Kyoto-shi, Kyoto 600-8530 (JP)
(72) Inventor: SANDA, Takaaki, Kyoto 600-8530 (JP); KASUYA, Makoto, Kyoto 600-8530 (JP); YAMAKAWA, Kenta, Kyoto 600-8530 (JP)
(74) Representative: Horn Kleimann Waitzhofer Patentanwälte PartG mbB
(86) International application number: PCT/JP2011/056347
(87) International publication number: WO 2012/042933

(56) References cited:
- JP-A- 4 013 989
- JP-A- H0 495 909
- JP-A- 2004 109 297
- JP-A- 2005 292 471
- JP-A- 2006 236 849
- JP-U- 62 175 638
- US-A1- 2004 240 083
- US-A1- 2005 040 324
- US-A1- 2008 240 786

## Description

### TECHNICAL FIELD

The present invention relates to an optical sensor having a light projecting unit, a light receiving unit, and a processing unit performing detection processing using a light receiving amount signal output from the light receiving unit. Particularly, the present invention relates to a technique for fixing a lens unit included in each of a light projecting unit and a light receiving unit.

### BACKGROUND ART

An optical sensor includes a light projecting section provided with a light emitting element such as a laser diode or an LED, and a light receiving section provided with a light receiving element such as a photodiode, a CMOS, or a CCD. Further, a lens unit including a single lens or a plurality of lenses supported by a lens holder is provided in front of each of the light emitting element and the light receiving element.

When an optical sensor is required to have high detection accuracy, such as a displacement sensor or a photoelectric sensor for safety applications, it is necessary to strictly match optical axes of a light emitting element or a light receiving element (hereinafter collectively referred to as an "optical element") and a lens unit and adjust a focus position of the lens unit. As a conventional example of such a sensor, for example, Patent Literature 1 describes forming an optical unit by integrally providing a substrate with a light emitting element mounted thereon and a lens unit for projecting light, and a substrate with a light receiving element mounted thereon and a lens unit for receiving light, on a support plate called "base", and then incorporating the optical unit into a casing of a sensor. Patent Literature 1 also describes fixing an L-shaped lens holder of the lens unit for receiving light to the base with screws, temporarily fixing a clamp fitting to the lens holder to insert a light receiving lens therebetween, adjusting an optical axis of the lens, and thereafter fastening the clamp member to fix the lens.

Further, as another conventional example, Patent Literature 2 describes assembling a light projecting module in which a light emitting element and a lens for projecting light are integrated, and mounting the light projecting module on a circuit substrate within a sensor. In addition, with regard to assembly of the light projecting module, Patent Literature 2 describes fitting the light emitting element into a rear end portion of a cylindrical holder, then inserting a lens unit from the front of the holder, and adjusting the position of the lens unit with respect to each of an optical axis direction (a Z axis direction) and two axes (an X axis direction and a Y axis direction) constituting a plane perpendicular to the optical axis direction, while supporting the lens unit by a special component (a lens component with a runner).

As still another conventional example, Patent Literature 3 describes sealing a light emitting element in a resin member having a light transmission property, integrally forming a lens unit on an upper surface of the resin member to produce an optical module in which the light emitting element and the lens unit are aligned, and incorporating the optical module into a sensor.

US 2008/240786 A1 discloses an optical unit which includes an optical element having a first combining surface and a second combining surface that applied an adhesive that is cured when exposed to a curing light respectively and that have different transmittance of the curing light; and a mount member combined with the optical element by the adhesive. The adhesive is cured when exposed to the curing light.

### CITATION LIST

### PATENT LITERATURE

PTL 1: Japanese Patent Laying-Open No. 2005-292471
PTL 2: Japanese Patent Laying-Open No. 2006-54436
PTL 3: Japanese Patent Laying-Open No. 2007-142371

### SUMMARY OF INVENTION

### TECHNICAL PROBLEM

In the invention described in Patent Literature 1, since the lens holder and the clamp fitting are fixed with screws, the number of parts is increased, and the number of operations is also increased.

Further, in actual assembly processing, an operation of adjusting the position and the optical axis of the optical element and an operation of accordingly adjusting the position and the optical axis of the lens unit are repeated many times to determine the optimum state of both and fix both, resulting in more complicated operations.

In addition, in each of the inventions described in Patent Literature 2 and Patent Literature 3, an operation of adjusting optical axes of the optical element and the lens unit and fixing them is performed outside a casing, and thereafter the optical module in which they are integrated is incorporated into the casing of the sensor. However, in order to ensure the detection accuracy of the sensor, it is desirable to fix the optical element and the lens unit within the casing of the sensor.

However, since the casing and parts of the sensor are small in size, and complicated operations are required as described above, it is difficult to position and fix the optical element and the lens unit within the casing.

The present invention has focused attention on the above problem. One object of the present invention is to be able to facilitate an operation of adjusting the relationship between a lens unit and an optical element in terms of position and optical axis and fixing the lens unit, by adding a simple configuration. Another object of the present invention is to be able to reliably ensure detection accuracy by facilitating an operation within a casing of a sensor, and to be able to achieve commonality of a configuration required to fix the lens unit in plural types of sensors.

### SOLUTION TO PROBLEM

A method of fixing a lens unit presented by the present invention can be performed on a lens unit of each of a light projecting unit and a light receiving unit of an optical sensor. In this method, at least one pair of columnar bodies is vertically installed around a location where the lens unit is to be disposed on a support plate provided within a casing of the sensor, such that the columnar bodies face each other with the location where the lens unit is to be disposed being interposed therebetween. Then, an optical element paired with the lens unit is fixed to a predetermined location, and thereafter the lens unit is inserted into a space between the columnar bodies, and a position and an orientation of the lens unit with respect to the optical element are adjusted. Subsequently, adhesive resin is injected into a gap between the lens unit and each columnar body with the adjusted state of the lens unit being maintained, and the lens unit is fixed by curing the resin.

Each columnar body can be integrally provided on the support plate, for example by molding processing. In the present invention, firstly, the optical element is fixed after its position and optical axis are adjusted, then the lens unit is inserted into the space surrounded by the columnar bodies while being supported by a dedicated jig or the like. Here, optical axes of the lens unit and the optical element are matched, and the position and the orientation of the lens unit are adjusted such that a focus is set at an appropriate position. After the adjustment is finished, the adhesive resin is injected between the lens unit and each columnar body with the adjusted state of the lens unit being maintained, and the resin is cured. Thereby, the lens body is supported by each columnar body via the adhesive resin.

According to the method described above, by disposing the columnar bodies such that the lens unit has a certain margin with respect to the columnar bodies, the position and the orientation of the lens unit can be readily changed within the space between these columnar bodies. Further, since the position of the optical element is firstly fixed and thereafter only the lens unit should be moved accordingly, an operation can be advanced efficiently. Furthermore, the lens unit can be fixed by injecting the adhesive resin between each columnar body and the lens unit, and supporting the lens unit until the resin is cured. Therefore, an operation of fixing the lens unit is also facilitated.

In a preferable embodiment of the present invention, at least the lens unit of the light projecting unit is inserted into the space surrounded by the columnar bodies in a state not contacting the support plate, and the position of the lens unit in each of a direction of an optical axis of the optical element (the Z axis direction) and two directions (the X axis direction and the Y axis direction) on a plane perpendicular to the optical axis is adjusted. While it is necessary to strictly adjust, in particular, an optical axis and a focus position of the light projecting section in order to ensure detection accuracy, the lens unit in the above embodiment can be moved in a space above the support plate, along each of the X, Y, and Z axis directions, and thus necessary adjustment can be readily performed. Further, even if the adjusted lens unit does not contact the support plate, the lens unit can be supported by the surrounding columnar bodies and the adhesive resin, with the adjusted position thereof being maintained.

In another preferable embodiment, the adhesive resin is injected into the gap between the lens unit of the light projecting section and each columnar body, at a position corresponding to an optical axis of the optical element paired with the lens unit. According to the method, the lens unit can be stably maintained at a position through which light passes, and thus accuracy of a detection beam can be ensured.

In another preferable embodiment, a side of the columnar bodies facing the location where the lens unit is to be disposed is formed to have a width narrower than that of an opposite side thereof. Further, ultraviolet curable resin is used as the adhesive resin, and the resin injected between the lens unit and each columnar body is cured by emitting ultraviolet light toward the support plate.

According to the above embodiment, by forming the side of the columnar bodies facing the lens unit to have a width narrower than that of an opposite side thereof, the emitted ultraviolet light is readily guided, along surfaces of the columnar body, to the gap between the lens unit and the columnar body. Therefore, the lens unit can be fixed by quickly curing the ultraviolet curable resin.

In a more preferable embodiment, the optical element and the lens unit are fixed after the support plate on which the columnar bodies are vertically installed is introduced into the casing of the sensor and fixed. Since the positions and optical axes of the optical element and the lens unit can be accurately adjusted and the optical element and the lens unit can be fixed by a simple operation in the present invention, it is easy to firstly introduce the support plate on which the columnar bodies are formed into the casing of the sensor and fix it, and then fix the optical element and the lens unit within the casing. Therefore, the lens unit can be fixed while confirming the state of positioning of the optical axes and the focus with the optical element and the lens unit being introduced into the casing, and the detection accuracy of the sensor can be assured with high probability.

In an optical sensor assembled by the method of fixing a lens unit described above, each of a light projecting section and a light receiving section includes an optical element fixed to a support plate within a casing of the sensor, and a lens unit provided to face the optical element. For each lens unit of the light projecting section and the light receiving section, at least one pair of columnar bodies are vertically installed on the support plate to face each other with the lens unit being interposed therebetween, and the lens unit is fixed to the columnar bodies via adhesive resin.

Further, in an optical sensor assembled by the method of fixing a light emitting component, a light projecting section includes a lens unit fixed to a support plate within a casing of the sensor, and a substrate on which a light emitting component is mounted, the substrate being provided to allow the light emitting component to face the lens unit. On the support plate, at least one pair of columnar bodies is vertically installed to face each other with the light emitting component being interposed therebetween, and the light emitting component is fixed to the columnar bodies via adhesive resin.

Each of the optical sensors configured as described above may be configured as a reflective sensor in which a light projecting section and a light receiving section are accommodated in the same casing, or may be configured as a transmissive sensor in which a light projecting section and a light receiving section are respectively accommodated in different casings.

### ADVANTAGEOUS EFFECTS OF INVENTION

According to the present invention, by adding a simple configuration, that is, columnar bodies, to the support plate provided within the casing, it becomes possible to fix the optical element, thereafter insert the lens unit into the space surrounded by the columnar bodies, adjust the position and the orientation of the lens unit with respect to the optical element, and fix the adjusted lens unit with the adhesive resin injected into the gap between the lens unit and each columnar body. Therefore, operation efficiency can be improved. Further, an operation for fixing the lens unit is also facilitated, which can save an operator's labor. Furthermore, if a certain margin is provided to a range in which the lens unit is movable in a state in which the lens unit can be fixed by the columnar bodies, there is no need to change the configuration for fixing the lens unit even if the lens unit is changed in size or shape. In addition, even in a case where the focus position of the lens unit should be changed due to a difference in detection distance depending on the type of sensor or due to a difference in the type or number of lenses introduced into the lens unit, such a case can be readily dealt with by adjusting the position of the lens unit in the optical axis direction.

Further, detection accuracy can be reliably ensured by introducing the optical element and the lens unit into the casing of the sensor and performing an operation of adjusting their positions and orientation and fixing them.

Furthermore, according to the present invention, after the lens unit of the light projecting section is firstly fixed, the substrate on which the light emitting component is mounted can be readily fixed using columnar bodies and adhesive resin as described above. Also in this case, by setting positions for disposing the columnar bodies such that the space between the columnar bodies has a sufficient margin with respect to the light emitting component, the degree of freedom in adjusting the position of the light emitting component in each of the optical axis direction and the two directions on the plane perpendicular to the optical axis direction can be ensured, and accurate adjustment can be achieved.

### BRIEF DESCRIPTION OF DRAWINGS

Fig. 1 is a perspective view showing a usage state of a displacement sensor.
Fig. 2 is a perspective view showing a casing of the displacement sensor with a light projecting/receiving surface facing the front.
Fig. 3 is a front view of one side surface of the casing of the displacement
Fig. 4 is a front view showing a configuration inside the casing.
Fig. 5 is a perspective view showing a configuration of a light projecting section in an enlarged manner.
Fig. 6 is a perspective view showing a configuration of a lens unit of a light receiving section in an enlarged manner.
Fig. 7 is an explanatory view showing how ultraviolet light is used for fixing the lens unit travel.
Fig. 8 is an explanatory view showing the relationship between a position for fixing a lens unit of the light projecting section and an optical axis.
Fig. 9 is an explanatory view showing an example where a mirror is provided in the light projecting section.
Fig. 10 is a perspective view and top view showing a configuration of a light projecting section of another embodiment in an enlarged manner.

### DESCRIPTION OF EMBODIMENTS

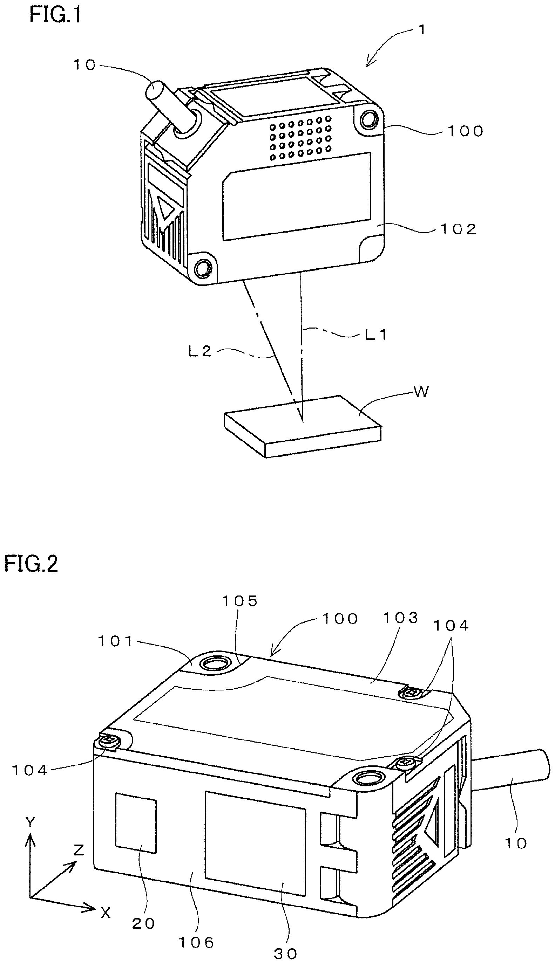

Fig. 1 shows a usage state of a displacement sensor to which the present invention is applied.

A displacement sensor 1 in accordance with the present embodiment is provided in a manufacturing line in a factory or the like. Displacement sensor 1 emits a laser beam L1 onto a workpiece W as a detection target, receives reflected light L2 of laser beam L1 from workpiece W, and measures a displacement of workpiece W based on the state of the received light. For this processing, a light projecting section, a light receiving section, a control substrate on which a processing circuit including a CPU is mounted, and the like are provided within a casing 100 of the sensor.

Further, displacement sensor 1 is connected to another casing (not shown) referred to as an "amplifier unit" via a cable 10 in the drawing. The displacement detected by the sensor is displayed on a display unit provided in the amplifier unit, and is also output to external equipment (not shown) such as a PLC or a personal computer via the amplifier unit.

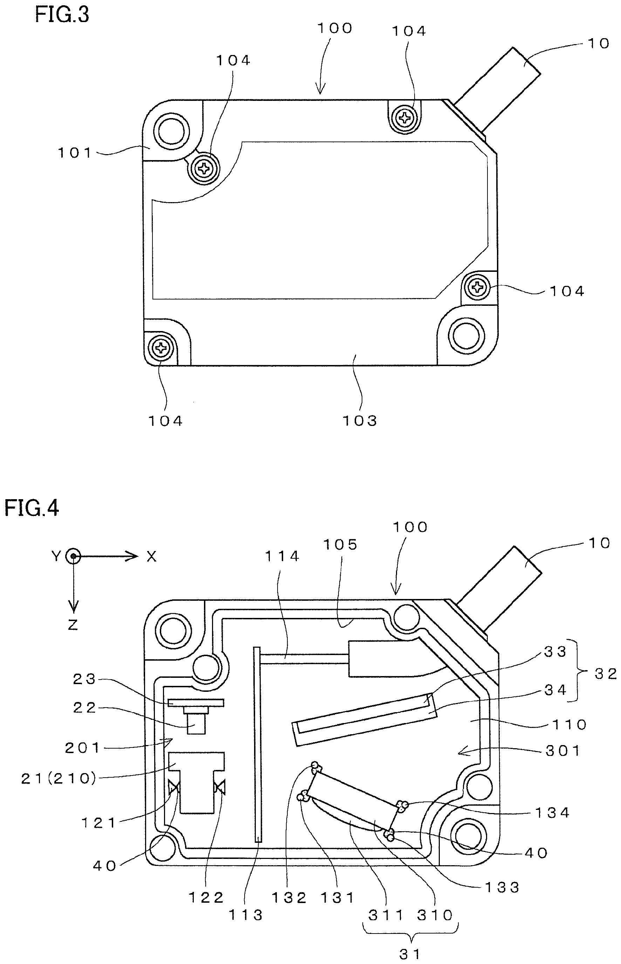

Fig. 2 is a perspective view showing casing 100 of sensor 1 with a light projecting/receiving surface 106 facing the front. Fig. 3 shows one side surface of casing 100 viewed from the front. It is to be noted that the Z axis in Fig. 2 corresponds to a direction of an optical axis of the light projecting section. Further, the X axis and the Y axis are axes defining an imaginary plane (i.e., a plane with a distance from the sensor of zero) serving as a basis for measuring the displacement, and are perpendicular to the Z axis.

In light projecting/receiving surface 106 of casing 100, a light projecting window 20 for emitting laser beam L1 and a light receiving window 30 for taking in reflected light L2 are formed. Further, for convenience of assembly processing, one side plate 101 of the casing is widely opened, and a cover plate 103 is placed over an opening 105 and fixed with screws 104.

Fig. 4 shows a configuration inside casing 100, with cover plate 103 being removed. In casing 100 of sensor 1, an accommodation space in a shape corresponding to opening 105 is formed, and a support plate 110 made of resin is assembled on an inner surface of a side plate 102 (shown in Fig. 1) which faces opening 105. Support plate 110 is formed by metal molding processing or resin molding processing, and triangular columns 121, 122 and circular columns 131, 132, 133, and 134 described later are integrally formed on an upper surface thereof.

At the left position in the space within casing 100, a power source substrate 113 is provided on support plate 111 in a standing orientation. A smaller region to the left of power source substrate 113 serves as a light projecting section 201, and a larger region to the right of power source substrate 113 serves as a light receiving section 301.

At the back of light receiving section 301 (which is located upside when the sensor is used), a cord wire 114 exposed from cable 10 is disposed in a state being connected to power source substrate 113. Although not shown in Fig. 4, the above control substrate on which the processing circuit is mounted is connected to a connector (not shown) provided on power source substrate 113, and is provided at an upper position within the casing with its surface facing support plate 110. Further, cable 10 also includes a cord wire to be connected to the control substrate.

Light projecting section 201 is composed of a substrate 23 on which a laser diode 22 is mounted (hereinafter referred to as an "LD substrate 23"), and a lens unit 21. LD substrate 23 is provided at the back of light projecting section 210 in an orientation standing on support plate 110 such that laser diode 22 is directed toward light projecting window 20.

Lens unit 21 is formed by accommodating a single lens or a plurality of lenses (not shown) inside a lens holder 210 having an opened front surface, and is provided in front of LD substrate 23.

Light receiving section 301 includes a light receiving unit 32 and a lens unit 31. Light receiving unit 32 is formed by assembling a substrate 33 having a chip element of a CMOS image sensor mounted thereon, on a holder portion 34, and is fixed on support plate 110 using an adhesive or the like. Lens unit 31 is formed by fitting a light collecting lens 311 in an opening in a lens holder 310 having an opened front surface. Lens unit 31 is fixed at a position in the vicinity of light receiving window 30, with a surface of lens 311 being slightly tilted with respect to a window surface thereof.

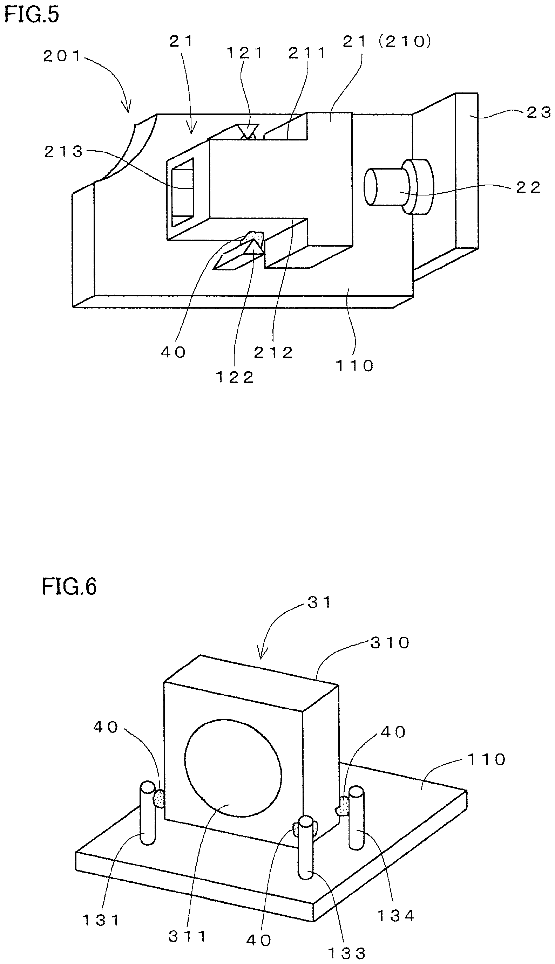

Fig. 5 is an enlarged perspective view of light projecting section 201 within sensor 1 described above.

As shown in Figs. 4 and 5, lens holder 210 of lens unit 21 of light projecting section 201 is formed to have a rear end portion with a large width, and to have a relatively long range from the rear end portion to a front end portion including an opening 213. Hereinafter, both side surfaces 211, 212 in the range having a narrow width will be referred to as "narrow width portions 211, 212". On support plate 110, a pair of triangular columns 121, 122 are vertically installed to face each other with a portion of lens holder 210 where narrow width portions 211, 212 are formed being interposed therebetween. Each of triangular columns 121, 122 is installed with one corner portion thereof facing lens holder 210.

Lens unit 21 is fixed to each of triangular columns 121, 122 via adhesive resin 40 (ultraviolet curable resin is used in the present embodiment) which is injected into a gap between each of triangular columns 121, 122 and lens holder 210 and cured.

Fig. 6 is an enlarged perspective view of lens unit 31 of light receiving section 301.

As shown in Figs. 4 and 6, circular columns 131, 132, 133, and 134 are vertically installed at positions in the vicinity of four corners of lens holder 310 of lens unit 31. Lens unit 31 is fixed to each of circular columns 131 to 134 via adhesive resin 40 which is injected into a gap between each of circular columns 131 to 134 and lens holder 310 and cured.

In assembling displacement sensor 1 configured as described above, firstly, support plate 110 is assembled on the inner surface of side plate 102 of casing 100, and thereafter various parts are introduced into casing 100 and fixed.

In this case, light projecting section 201 is formed prior to light receiving section 301. In an operation of forming light projecting section 201, firstly, LD substrate 23 is fixed at the back of light projecting section 201 by a method such as fixing with an adhesive or press fit. Then, lens unit 21 is inserted into a space between triangular columns 121 and 122 while being supported by a dedicated jig, and a position and an orientation of lens unit 21 with respect to each axis direction of the optical axis direction (the Z axis direction), a width direction (the X axis direction), and a height direction (the Y axis direction) are adjusted. Specifically, a measuring instrument is disposed at a position a predetermined distance away from light projecting/receiving surface 101 of casing 100, to measure the diameter, X-coordinate, and Y-coordinate of laser beam L1 emitted from laser diode 22 and passing through light projecting window 20, and adjustment is continued until these measurement values become predetermined appropriate values. Since this adjustment processing is performed with lens unit 21 not being in contact with support plate 110, lens unit 21 may also be finally fixed in a state floating from support plate 110.

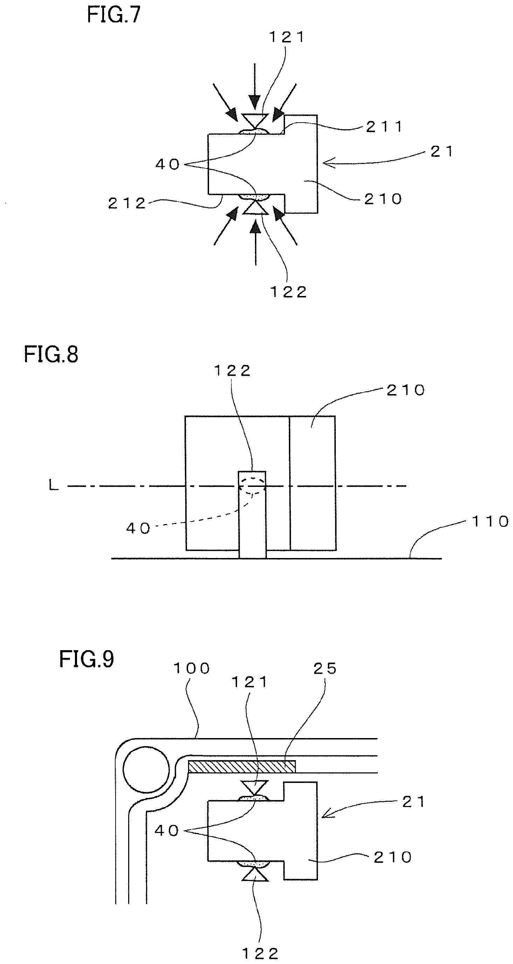

Even after the adjustment is finished, lens unit 21 is kept supported by the jig such that the position and the orientation of lens unit 21 are maintained in an adjusted state, and ultraviolet curable resin 40 is injected into the gap between lens holder 210 and each of triangular columns 121, 122. With lens unit 21 being still kept supported by the jig, ultraviolet light is emitted from above light projecting section 201 toward support plate 110. The ultraviolet light travels while spreading out, is reflected by support plate 110, an inner wall surface of casing 100, and the like, and thereby is guided toward lens unit 21 and triangular columns 121, 122. Although the gap between lens unit 21 and each of triangular columns 121, 122 is minute, each of triangular columns 121, 122 is disposed with one corner portion thereof facing lens unit 21, and thus the ultraviolet light can be diffracted, along side surfaces of each of triangular columns 121, 122, to a bonding portion, as indicated by arrows in Fig. 7. Thereby, resin 40 can be cured quickly, and thus lens unit 21 can be fixed before it is displaced after the adjustment.

According to the adjustment method described above, since there is only a minute difference between the distance between narrow width portions 211 and 212 of lens holder 21 and the distance between triangular columns 121 and 122, positioning with respect to the X axis direction can be readily performed. On the other hand, with respect to the Y axis direction, minute position adjustment can be performed by moving lens unit 21 in each of upward and downward directions. Further, a focus position is adjusted by adjusting the position of lens unit 21 in the Z axis direction. In the present embodiment, since lens unit 21 can be freely moved within a range in which narrow width portions 211, 212 of lens holder 210 face triangular columns 121, 122, the degree of freedom in setting the focus position can be increased.

Further, in the present embodiment, a range of a predetermined height centered at an optical axis L of lens unit 21 is located at a position for injecting ultraviolet curable resin 40, as shown in Fig. 8. Thereby, lens unit 21 can be stably supported at a height position through which laser beam L1 passes, and thus an emission direction of laser beam L1 and the diameter of the beam can be stabilized.

Since the ultraviolet light emitted to light projecting section 201 actually spreads over a considerably wide range, a mirror 25 may be provided in an inner side surface of casing 100 at a position facing lens unit 21, as shown in Fig. 9. Thus, a portion of the ultraviolet light spreading around lens unit 21 can be reflected by mirror 25 and guided toward lens unit 21, and thereby ultraviolet curable resin 40 can be cured more quickly.

As in the operation described above, also in an operation of forming light receiving section 301, light receiving unit 32 is firstly fixed on support plate 110, and lens unit 31 is inserted into a space surrounded by four circular columns 131 to 134. Then, a position and an orientation of lens unit 31 are adjusted such that light receiving unit 32 attains a light receiving state suitable for detection. For example, a detection target as a model is disposed at a location a certain distance away from light projecting/receiving surface 101, and image pick-up by the CMOS image sensor is performed while emitting laser beam L1 to the target. The position and the orientation of lens unit 31 are adjusted until the peak of a light receiving amount in generated image data appears at a position which matches the distance from sensor 1 to the target.

After the above adjustment is finished, ultraviolet curable resin 40 is injected into the gap between each of circular columns 131 to 134 and lens unit 310 with the position and the orientation of lens unit 31 at that moment being maintained. Then, ultraviolet light is emitted to fix lens unit 31 to each of circular columns 131 to 134.

Since circular columns 131 to 134 face each other with a location for disposing lens unit 31 being interposed therebetween, they can stably support lens unit 31. Further, since the position and the orientation of lens unit 31 with respect to circular columns 131 to 134 can be freely changed within a range in which four corners of lens unit 31 can be fixed to peripheral surfaces of circular columns 131 to 134 via ultraviolet curable resin 40, lens unit 31 can be accurately positioned with respect to light receiving unit 32.

However, in the present embodiment, lens unit 31 of light receiving section 301 is adjusted with lens unit 31 being in contact with support plate 110. That is, although the position of lens unit 31 in each of the X axis direction and the Z axis direction and the orientation of lens unit 31 are adjusted, the position of lens unit 31 in the Y axis direction is not adjusted. This is because, since light receiving section 301 has lens 311 larger than the lens of light projecting section 201, and the pixel array of the CMOS image sensor corresponds to a lateral width direction of light receiving unit 32, even if some deviation occurs in the position of the optical axis in the Y axis direction, such deviation does not have a significant effect on the position where reflected light enters the pixel array.

As described above, in the present embodiment, in forming each of light projecting section 201 and light receiving section 301, LD substrate 23 including laser diode 22 or light receiving unit 32 including the CMOS image sensor is firstly fixed, lens unit 21 or 31 is inserted into the space between a plurality of columnar bodies (triangular columns 121, 121 or circular columns 131 to 134) located in front of LD substrate 23 or light receiving unit 32, matching of optical axes of lens unit 21, 31 and an optical element (the laser diode or the CMOS image sensor) and focus position adjustment are performed, and thereafter lens unit 21, 31 is fixed. Therefore, processing of adjusting the optical axes and the focus position with high accuracy can be efficiently performed.

Further, by injecting ultraviolet curable resin 40 between the lens unit and each of the columnar bodies surrounding the lens unit and curing resin 40, the lens unit can be readily fixed without using fixing means such as a screw. Therefore, a fixing operation can be readily performed even within a narrow casing, and the optical axis and the focus position of lens unit 21, 31 can be matched accurately to ensure detection accuracy.

In addition, in the field of manufacturing sensors, there is a demand for employing common casing and parts for plural types of sensors. In the light projecting section 201 of the above embodiment, the lens unit can be freely moved along the Z axis direction within the range in which narrow width portions 211, 212 of lens unit 21 face triangular columns 121, 122. Therefore, even in a case where a detection distance differs depending on the type of sensor, such a case can be dealt with by adjusting the position of lens unit 21 in the Z axis direction, and thus can be dealt with without changing support plate 110 including the columnar bodies, LD substrate 23, and lens unit 21.

Similarly, in a case where the type or number of the lenses of lens unit 21 differs depending on the type of sensor, such a case can also be dealt with by adjusting the position of lens unit 21 in the Z axis direction.

Also in a case where lens holder 21, 31 of light projecting section 201 or light receiving section 301 is slightly changed in size or shape, lens unit 21, 31 can be fixed without changing positions for forming the columnar bodies, as long as there is a sufficient margin between the columnar bodies and the portions facing the columnar bodies (narrow width portions 211, 212 of lens holder 210 in lens unit 21, four corners of lens holder 310 in lens unit 31).

Further, although the above embodiment describes a case where the columnar bodies in light projecting section 201 are triangular columns and the columnar bodies in light receiving section 301 are circular columns, the present invention is not limited thereto, and all of the columnar bodies may be triangular columns. Furthermore, the shape of a columnar body suitable to guide ultraviolet light to the gap between the columnar body and the lens unit is not limited to a triangle, and it is only necessary that a side thereof facing the lens unit has a width narrower than that of an opposite side thereof. For example, a column having a semicircular cross section may be vertically installed on support plate 110 such that an arc portion thereof faces the location for disposing the lens unit.

Further, although the above embodiment describes a case where the present invention is applied to a light projecting section and a light receiving section of a displacement sensor, a lens unit can be fixed not only in a displacement sensor but also in a photoelectric switch for detecting an object and a multiple optical axis photoelectric sensor used for safety applications, by the same method as that in the above embodiment.

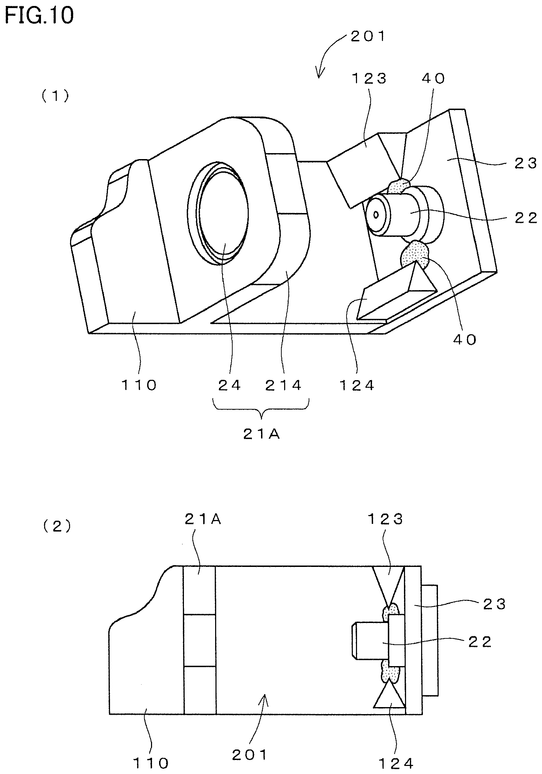

While the embodiment in which lens units 21, 31 of light projecting section 201 and light receiving section 301 are fixed to the columnar bodies vertically installed on support plate 110 via ultraviolet curable resin 40 has been described above, the same fixing method can also be applied to fix LD substrate 23. This application example will be described with reference to Fig. 10.

Fig. 10 (1) is an enlarged perspective view of light projecting section 201 of a displacement sensor in accordance with another embodiment, and Fig. 10 (2) is a top view of light projecting section 201. As shown in these drawings, light projecting section 201 in accordance with the present embodiment is provided with a lens unit 21A having a shape different from that in the previous embodiment, and LD substrate 23. Further, on support plate 110, a pair of triangular columns 123, 124 are vertically installed with a predetermined interval therebetween, behind a location for disposing lens unit 21A, in order to fix LD substrate 23.

Lens unit 21A is formed by fitting a lens 24 in a thin holder 214, and is fixed to support plate 110.

LD substrate 23 is fixed, with laser diode 22 being inserted into a space between triangular columns 123 and 124, and the substrate main body being located behind triangular columns 123, 124. This fixing is achieved by coupling between laser diode 22 and triangular columns 123, 124 via adhesive resin 40 which is injected into a gap between laser diode 22 and each of triangular columns 123, 124 and cured.

In the processing of assembling light projecting section 201 configured as described above, firstly, lens unit 21A is fixed on support plate 110 by a method such as fixing with an adhesive or press fit. Next, LD substrate 23 is introduced into casing 100 using a jig such that laser diode 22 is inserted into the space between triangular columns 123 and 124, and the substrate main body is inserted into a space behind triangular columns 123, 124.

Subsequently, laser diode 22 is caused to emit light, and the diameter, X-coordinate, and Y-coordinate of laser beam L1 emitted through lens 24 and light projecting window 20 are measured. While measuring these values, a position and an orientation of LD substrate 23 are adjusted such that these measurement values become predetermined appropriate values. In this adjustment processing, the position of LD substrate 23 in each of the X, Y, and Z axis directions is changed, on the condition that any portion in an outer peripheral surface of laser diode 22 is kept facing triangular column 123, 124. After the adjustment is finished, LD substrate 23 is kept supported by the jig such that the adjusted state is maintained, and ultraviolet curable resin 40 is injected into the gap between laser diode 22 and each of triangular columns 123, 124. Further, ultraviolet light is emitted to cure ultraviolet curable resin 40, and thereby LD substrate 23 is fixed in the adjusted state.

With the above method, in the X direction, minute position adjustment can be performed by providing a margin between each of triangular columns 123, 124 and laser diode 22 in a range in which the fixing via ultraviolet curable resin 40 is not affected. Further, with respect to the Y axis direction, the height of laser diode 22 can be adjusted by moving LD substrate 23 in each of upward and downward directions. In addition, LD substrate 23 can also be finally fixed without contacting support plate 110. Also with respect to the Z direction, the position of LD substrate 23 can be changed within a range in which laser diode 22 can be stably supported between triangular columns 123 and 124, and thus the degree of freedom in setting the focus position can be ensured.

### REFERENCE SIGNS LIST

1: displacement sensor, 201: light projecting section, 301: light receiving section, 21, 21A, 31: lens unit, 22: laser diode, 32: light receiving unit, 40: ultraviolet curable resin, 100: casing, 110: support plate, 121, 122: triangular column, 131, 132, 133, 134: circular column, 210, 310: lens unit.

## Claims

1. A method of fixing a lens unit (21, 31) of an optical sensor (1) during assembly processing of the sensor (1), the lens unit (21, 31) being included in a light projecting unit (201) or a light receiving unit (301) of the sensor (1), comprising the steps of:
fixing at least a pair of columnar bodies (121, 122, 131, 132, 133, 134) around a position on a support plate (110) provided within a casing (100) of the sensor (1), the position being where the lens unit (21, 31) is to be disposed, wherein the columnar bodies (121, 122, 131, 132, 133, 134) are fixed such that the columnar bodies (121, 122, 131, 132, 133, 134) are perpendicular to a surface of the support plate (110) and the columnar bodies (121, 122, 131, 132, 133, 134) face each other with a space for inserting the lens unit (21, 31) interposed between the columnar bodies (121, 122, 131, 132, 133, 134);
fixing an optical element paired with the lens unit (21, 31) to a predetermined position on said support plate (110);
inserting the lens unit (21, 31) into the space between the columnar bodies (121, 122, 131, 132, 133, 134);
adjusting a position and an orientation of the lens unit (21, 31) with respect to the optical element to match optical axes of the lens unit (21, 31) and the optical element;
fixing the lens unit (21, 31) by injecting adhesive resin (40) into a gap between the lens unit (21, 31) and each columnar body (121, 122, 131, 132, 133, 134) with an adjusted state of the lens unit (21, 31) being maintained; and
curing the adhesive resin (40),
wherein ultraviolet curable resin (40) is used as the adhesive resin (40), and the adhesive resin (40) injected into the gap between the lens unit (21, 31) and each columnar body (121, 122, 131, 132, 133, 134) is cured by emitting ultraviolet light toward the support plate (110), and
wherein each columnar body (121, 122, 131, 132, 133, 134) has a tapered shape with a width that narrows towards the gap to guide the emitted ultraviolet light along surfaces of each columnar body (121, 122, 131, 132, 133, 134) to the gap between the lens unit (21, 31) and each columnar body (121, 122, 131, 132, 133, 134).

2. The method of fixing a lens unit (21, 31) of an optical sensor (1) according to claim 1, wherein at least the lens unit (21, 31) of the light projecting unit (201) is inserted into the space between the columnar bodies (121, 122, 131, 132, 133, 134) so as to avoid contact with said support plate (110), and the position of the lens unit (21, 31) is adjusted in two directions, that is, in a direction of an optical axis of said optical element and on a plane perpendicular to the optical axis.

3. The method of fixing a lens unit (21, 31) of an optical sensor (1) according to claim 1 or 2, wherein said adhesive resin (40) is injected into the gap between the lens unit (21, 31) of said light projecting unit (201) and each columnar body (121, 122, 131, 132, 133, 134), at a height corresponding to a height of an optical axis of the optical element paired with the lens unit (21, 31).

4. The method of fixing a lens unit (21, 31) of an optical sensor (1) according to any of claims 1 to 3, wherein said optical element and said lens unit (21, 31) are fixed after the support plate (110) on which said columnar bodies (121, 122, 131, 132, 133, 134) are fixed is introduced into the casing (100) of the sensor (1) and fixed.

5. The method of fixing a lens unit (21, 31) of an optical sensor (1) according to any one of claims 1 to 4, wherein the lens unit (21, 31) comprises a lens holder (210) for holding a lens, the lens holder (210) having a portion with a width narrower than the space between the columnar bodies (121, 122, 131, 132, 133, 134) and a portion with a width wider than the space between the columnar bodies (121, 122, 131, 132, 133, 134).

6. The method of fixing a lens unit (21, 31) of an optical sensor (1) according to any one of claims 1 to 4, wherein each of the columnar bodies (121, 122, 131, 132, 133, 134) has a triangular cross-section with a corner of the triangle facing the lens unit (21, 31) or wherein each of the columnar bodies (121, 122, 131, 132, 133, 134) has a circular cross-section.

7. The method of fixing a lens unit (21, 31) of an optical sensor (1) according to any one of claims 1 to 4, wherein each of the columnar bodies (121, 122, 131, 132, 133, 134) has a semicircular cross-section orientated such that an arc portion thereof faces the position where the lens unit (21, 31) is to be disposed.

8. The method of fixing a lens unit (21, 31) of an optical sensor (1) according to any one of the preceding claims, wherein a portion of the ultraviolet light is reflected by a mirror (25) and guided towards the lens unit (21, 31), and the mirror (25) is provided in an inner side surface of the casing (100) at a position facing the lens unit (21, 31).

9. An optical sensor (1), comprising:
a light projecting unit (201);
a light receiving unit (301); and
a processing unit performing detection processing using a light receiving amount signal output from the light receiving unit (301),
wherein each of said light projecting unit (201) and said light receiving unit (301) includes an optical element fixed to a support plate (110) within a casing (100) of the sensor (1), and a lens unit (21, 31) provided to face the optical element, and
in each lens unit (21, 31) of said light projecting unit (201) and said light receiving unit (301), at least a pair of columnar bodies (121, 122, 131, 132, 133, 134) is fixed on said support plate (110) at a position, the position being a position where the lens unit (21, 31) is disposed, wherein the columnar bodies (121, 122, 131, 132, 133, 134) are fixed such that the columnar bodies (121, 122, 131, 132, 133, 134) face each other with the lens unit (121, 122, 131, 132, 133, 134) interposed between the columnar bodies (121, 122, 131, 132, 133, 134), and the lens unit (21, 31) is fixed to the columnar bodies (121, 122, 131, 132, 133, 134) via adhesive resin (40) located in a gap between the lens unit (21, 31) and each columnar body (121, 122, 131, 132, 133, 134),
wherein optical axes of the lens unit (21, 31) and the optical element are matched, wherein each columnar body (121, 122, 131, 132, 133, 134) has a tapered shape with a width that narrows towards the gap to guide the emitted ultraviolet light along surfaces of each columnar body (121, 122, 131, 132, 133, 134) to the gap between the lens unit (21, 31) and each columnar body (121, 122, 131, 132, 133, 134), and wherein the adhesive resin (40) is an ultraviolet curable resin.

## Patentansprüche

1. Verfahren zum Fixieren einer Linseneinheit (21, 31) eines optischen Sensors (1) während einer Montageverarbeitung des Sensors (1), wobei die Linseneinheit (21, 31) in einer Lichtprojektionseinheit (201) oder einer Lichtempfangseinheit (301) des Sensors (1) aufgenommen ist, umfassend die Schritte:
Fixieren mindestens eines Paars säulenförmiger Körper (121, 122, 131, 132, 133, 134) rings um eine Position auf einer Trägerplatte (110), die innerhalb eines Gehäuses (100) des Sensors (1) bereitgestellt ist, wobei die Position diejenige ist, an welcher die Linseneinheit (21, 31) anzuordnen ist, wobei die säulenförmigen Körper (121, 122, 131, 132, 133, 134) derart fixiert werden, dass die säulenförmigen Körper (121, 122, 131, 132, 133, 134) senkrecht zu einer Fläche der Trägerplatte (110) sind und die säulenförmigen Körper (121, 122, 131, 132, 133, 134) einander zugewandt sind, wobei ein Raum zum Einführen der Linseneinheit (21, 31) zwischen den säulenförmigen Körpern (121, 122, 131, 132, 133, 134) angeordnet ist;
Fixieren eines mit der Linseneinheit (21, 31) gepaarten optischen Elements an einer vorbestimmten Position auf der Trägerplatte (110);
Einführen der Linseneinheit (21, 31) in den Raum zwischen den säulenförmigen Körpern (121, 122, 131, 132, 133, 134);
Justieren einer Position und einer Ausrichtung der Linseneinheit (21, 31) in Bezug auf das optische Element, um optische Achsen der Linseneinheit (21, 31) und des optischen Elements in Übereinstimmung zu bringen;
Fixieren der Linseneinheit (21, 31) durch Einspritzen eines Klebstoffs (40) in einen Zwischenraum zwischen der Linseneinheit (21, 31) und einem jeden der säulenförmigen Körper (121, 122, 131, 132, 133, 134), wobei ein justierter Zustand der Linseneinheit (21, 31) beibehalten wird; und
Aushärten des Klebstoffs (40),
wobei als der Klebstoff (40) ultravioletthärtender Kunststoff (40) verwendet wird und der in den Zwischenraum zwischen der Linseneinheit (21, 31) und einem jeden der säulenförmigen Körper (121, 122, 131, 132, 133, 134) eingespritzte Klebstoff (40) durch Ausstrahlen von ultraviolettem Licht in Richtung der Trägerplatte (110) ausgehärtet wird, und
wobei ein jeder der säulenförmigen Körper (121, 122, 131, 132, 133, 134) eine sich verjüngende Form mit einer Breite aufweist, die sich zu dem Zwischenraum hin verschmälert, um das ausgestrahlte ultraviolette Licht entlang von Flächen des jeweiligen säulenförmigen Körpers (121, 122, 131, 132, 133, 134) zu dem Zwischenraum zwischen der Linseneinheit (21, 31) und dem jeweiligen säulenförmigen Körper (121, 122, 131, 132, 133, 134) zu leiten.

2. Verfahren zum Fixieren einer Linseneinheit (21, 31) eines optischen Sensors (1) nach Anspruch 1, wobei mindestens die Linseneinheit (21, 31) der Lichtprojektionseinheit (201) derart in den Raum zwischen den säulenförmigen Körpern (121, 122, 131, 132, 133, 134) eingeführt wird, dass ein Kontakt mit der Trägerplatte (110) vermieden wird, und die Position der Linseneinheit (21, 31) in zwei Richtungen justiert wird, nämlich in einer Richtung einer optischen Achse des optischen Elements und auf einer zu der optischen Achse senkrechten Ebene.

3. Verfahren zum Fixieren einer Linseneinheit (21, 31) eines optischen Sensors (1) nach Anspruch 1 oder 2, wobei der Kunststoff (40) auf einer Höhe, die der Höhe einer optischen Achse des mit der Linse (21, 31) gepaarten optischen Elements entspricht, in den Zwischenraum zwischen der Linseneinheit (21, 31) der Lichtprojektionseinheit (201) und einem jeweiligen der säulenförmigen Körper (121, 122, 131, 132, 133, 134) eingespritzt wird.

4. Verfahren zum Fixieren einer Linseneinheit (21, 31) eines optischen Sensors (1) nach einem der Ansprüche 1 bis 3, wobei das optische Element und die Linseneinheit (21, 31) fixiert werden, nachdem die Trägerplatte (110), auf welcher die säulenförmigen Körper (121, 122, 131, 132, 133, 134) fixiert sind, in das Gehäuse (100) des Sensors (1) eingebracht und fixiert ist.

5. Verfahren zum Fixieren einer Linseneinheit (21, 31) eines optischen Sensors (1) nach einem der Ansprüche 1 bis 4, wobei die Linseneinheit (21, 31) einen Linsenhalter (210) zum Halten einer Linse umfasst, wobei der Linsenhalter (210) einen Abschnitt mit einer Breite aufweist, die schmaler als der Raum zwischen den säulenförmigen Körpern (121, 122, 131, 132, 133, 134) ist, sowie einen Abschnitt mit einer Breite, die breiter als der Raum zwischen den säulenförmigen Körpern (121, 122, 131, 132, 133, 134) ist.

6. Verfahren zum Fixieren einer Linseneinheit (21, 31) eines optischen Sensors (1) nach einem der Ansprüche 1 bis 4, wobei ein jeder der säulenförmigen Körper (121, 122, 131, 132, 133, 134) einen dreieckigen Querschnitt mit einer der Linseneinheit (21, 31) zugewandten Ecke des Dreiecks aufweist, oder wobei ein jeder der säulenförmigen Körper (121, 122, 131, 132, 133, 134) einen kreisförmigen Querschnitt aufweist.

7. Verfahren zum Fixieren einer Linseneinheit (21, 31) eines optischen Sensors (1) nach einem der Ansprüche 1 bis 4, wobei ein jeder der säulenförmigen Körper (121, 122, 131, 132, 133, 134) einen halbkreisförmigen Querschnitt aufweist, welcher derart ausgerichtet ist, dass ein Bogenabschnitt davon der Position zugewandt ist, an welcher die Linseneinheit (21, 31) anzuordnen ist.

8. Verfahren zum Fixieren einer Linseneinheit (21, 31) eines optischen Sensors (1) nach einem der vorhergehenden Ansprüche, wobei ein Abschnitt des ultravioletten Lichts von einem Spiegel (25) reflektiert und in Richtung der Linseneinheit (21, 31) geführt wird und der Spiegel (25) in einer Innenseitenfläche des Gehäuses (100) an einer der Linseneinheit (21, 31) zugewandten Position bereitgestellt ist.

9. Optischer Sensor (1) mit:
einer Lichtprojektionseinheit (201);
einer Lichtempfangseinheit (301); und
einer Verarbeitungseinheit, die eine Detektionsverarbeitung unter Verwendung eines Lichtempfangsmengensignals durchführt, das von der Lichtempfangseinheit (301) ausgegeben wird,
wobei sowohl die Lichtprojektionseinheit (201) als auch die Lichtempfangseinheit (301) jeweils ein optisches Element, das an einer Trägerplatte (110) innerhalb eines Gehäuses (100) des Sensors (1) fixiert ist, und eine Linseneinheit (21, 31) aufweisen, die derart bereitgestellt ist, dass sie dem optischen Element zugewandt ist, und
in jeder Linseneinheit (21, 31) der Lichtprojektionseinheit (201) und der Lichtempfangseinheit (301) mindestens ein Paar säulenförmiger Körper (121, 122, 131, 132, 133, 134) an der Trägerplatte (110) an einer Position fixiert ist, bei der es sich um eine Position handelt, an welcher die Linseneinheit (21, 31) angeordnet ist, wobei
die säulenförmigen Körper (121, 122, 131, 132, 133, 134) derart fixiert sind, dass die säulenförmigen Körper (121, 122, 131, 132, 133, 134) einander zugewandt sind, wobei die Linseneinheit (121, 122, 131, 132, 133, 134) zwischen den säulenförmigen Körpern (121, 122, 131, 132, 133, 134) angeordnet ist und die Linseneinheit (21, 31) an den säulenförmigen Körpern (121, 122, 131, 132, 133, 134) über einen Klebstoff (40) fixiert ist, welcher sich in einem Zwischenraum zwischen der Linseneinheit (21, 31) und einem jeden der säulenförmigen Körper (121, 122, 131, 132, 133, 134) befindet,
wobei optische Achsen der Linseneinheit (21, 31) und des optischen Elements miteinander in Übereinstimmung gebracht sind,
wobei jeder der säulenförmigen Körper (121, 122, 131, 132, 133, 134) eine sich verjüngende Form mit einer Breite aufweist, die sich zu dem Zwischenraum hin verschmälert, um das ausgestrahlte ultraviolette Licht entlang von Flächen des jeweiligen säulenförmigen Körpers (121, 122, 131, 132, 133, 134) zu dem Zwischenraum zwischen der Linseneinheit (21, 31) und dem jeweiligen säulenförmigen Körper (121, 122, 131, 132, 133, 134) zu leiten, und
wobei der Klebstoff (40) ein ultravioletthärtender Kunststoff ist.

## Revendications

1. Procédé de fixation d'une unité lentille (21, 31) d'un capteur optique (1) lors d'un traitement d'assemblage du capteur (1), l'unité lentille (21, 31) étant comprise dans une unité de projection de lumière (201) ou dans une unité de réception de lumière (301) du capteur (1), comprenant les étapes consistant à :
fixer au moins deux corps colonnaires (121, 122, 131, 132, 133, 134) autour d'une position d'une plaque de support (110) disposée à l'intérieur d'un boîtier (100) du capteur (1), la position se trouvant à l'endroit où doit être disposée l'unité lentille (21, 31), dans lequel les corps colonnaires (121, 122, 131, 132, 133, 134) sont fixés de sorte que les corps colonnaires (121, 122, 131, 132, 133, 134) soient perpendiculaires à une surface de la plaque support (110) et que les corps colonnaires (121, 122, 131, 132, 133, 134) se fassent face les uns les autres, un espace permettant d'introduire l'unité lentille (21, 31) étant interposé entre les corps colonnaires (121, 122, 131, 132, 133, 134) ;
fixer un élément optique apparié avec l'unité lentille (21, 31) à une position prédéterminée sur ladite plaque de support (110) ;
introduire l'unité lentille (21, 31) dans l'espace séparant les corps colonnaires (121, 122, 131, 132, 133, 134) ;
régler une position et une orientation de l'unité lentille (21, 31) par rapport à l'élément optique de façon à mettre en correspondance les axes optiques de l'unité lentille (21, 31) et de l'élément optique ;
fixer l'unité lentille (21, 31) par une injection de résine adhésive (40) dans un espace séparant l'unité lentille (21, 31) et chaque corps colonnaire (121, 122, 131, 132, 133, 134), un état réglé de l'unité lentille (21, 31) étant maintenu ; et faire durcir la résine adhésive (40),
dans lequel une résine pouvant durcir à la lumière ultraviolette (40) est utilisée en tant que résine adhésive (40), et la résine adhésive (40) injectée dans l'espace séparant l'unité lentille (21, 31) et chaque corps colonnaire (121, 122, 131, 132, 133, 134) est durcie par une émission de lumière ultraviolette en direction de la plaque support (110), et
dans lequel chaque corps colonnaire (121, 122, 131, 132, 133, 134) a une forme conique dont la largeur va en rétrécissant en direction de l'espace de façon à guider la lumière ultraviolette émise le long de surfaces de chaque corps colonnaire (121, 122, 131, 132, 133, 134) vers l'espace séparant l'unité lentille (21, 31) et chaque corps colonnaire (121, 122, 131, 132, 133, 134).

2. Procédé de fixation d'une unité lentille (21, 31) d'un capteur optique (1) selon la revendication 1, dans lequel au moins l'unité lentille (21, 31) de l'unité de projection de lumière (201) est introduite dans un espace séparant les corps colonnaires (121, 122, 131, 132, 133, 134) de façon à éviter tout contact avec ladite plaque de support (110), et la position de l'unité lentille (21, 31) est réglée dans deux directions, c'est-à-dire dans une direction d'un axe optique dudit élément optique et dans un plan perpendiculaire à l'axe optique.

3. Procédé de fixation d'une unité lentille (21, 31) d'un capteur optique (1) selon la revendication 1 ou la revendication 2, dans lequel ladite résine adhésive (40) est injectée dans l'espace séparant l'unité lentille (21, 31) de ladite unité de projection de lumière (201) et chaque corps colonnaire (121, 122, 131, 132, 133, 134), à une hauteur correspondant à une hauteur d'un axe optique de l'élément optique apparié avec l'unité lentille (21, 31).

4. Procédé de fixation d'une unité lentille (21, 31) d'un capteur optique (1) selon l'une quelconque des revendications 1 à 3, dans lequel ledit élément optique et ladite unité lentille (21, 31) sont fixés après l'introduction et la fixation de la plaque de support (110) sur laquelle sont fixés lesdits corps colonnaires (121, 122, 131, 132, 133, 134) dans le boîtier (100) du capteur (1).

5. Procédé de fixation d'une unité lentille (21, 31) d'un capteur optique (1) selon l'une quelconque des revendications 1 à 4, dans lequel l'unité lentille (21, 31) comprend un porte-lentille (210) destiné à maintenir une lentille, le porte-lentille (210) comportant une partie de largeur plus étroite que l'espace séparant les corps colonnaires (121, 122, 131, 132, 133, 134) et une partie de largeur plus large que l'espace séparant les corps colonnaires (121, 122, 131, 132, 133, 134).

6. Procédé de fixation d'une unité lentille (21, 31) d'un capteur optique (1) selon l'une quelconque des revendications 1 à 4, dans lequel chacun des corps colonnaires (121, 122, 131, 132, 133, 134) a une section transversale triangulaire, un angle du triangle étant orienté vers l'unité lentille (21, 31), ou dans lequel chacun des corps colonnaires (121, 122, 131, 132, 133, 134) a une section transversale circulaire.

7. Procédé de fixation d'une unité lentille (21, 31) d'un capteur optique (1) selon l'une quelconque des revendications 1 à 4, dans lequel chacun des corps colonnaires (121, 122, 131, 132, 133, 134) a une section transversale semi-circulaire orientée de sorte que sa partie arquée soit orientée vers la position à laquelle doit être disposée l'unité lentille (21, 31).

8. Procédé de fixation d'une unité lentille (21, 31) d'un capteur optique (1) selon l'une quelconque des revendications précédentes, dans lequel une partie de la lumière ultraviolette est réfléchie par un miroir (25) et est guidée en direction de l'unité lentille (21, 31), et le miroir (25) est disposé dans une surface latérale intérieure du boîtier (100) à une position faisant face à l'unité lentille (21, 31).

9. Capteur optique (1), comprenant :
une unité de projection de lumière (201) ;
une unité de réception de lumière (301) ; et
une unité de traitement mettant en oeuvre un traitement de détection au moyen d'un signal de quantité de réception de lumière délivré par l'unité de réception de lumière (301),
dans lequel chacune de ladite unité de projection de lumière (201) et de ladite unité de réception de lumière (301) comprend un élément optique fixé à une plaque de support (110) à l'intérieur d'un boîtier (100) du capteur (1), et une unité lentille (21, 31) disposée de façon à faire face à l'élément optique, et
dans chaque unité lentille (21, 31) de ladite unité de projection de lumière (201) et de ladite unité de réception de lumière (301), au moins deux corps colonnaires (121, 122, 131, 132, 133, 134) sont fixés à ladite plaque de support (110) au niveau d'une position, la position étant une position à laquelle est disposée l'unité lentille (21, 31), dans lequel
les corps colonnaires (121, 122, 131, 132, 133, 134) sont fixés de sorte que les corps colonnaires (121, 122, 131, 132, 133, 134) se fassent face les uns les autres, l'unité lentille (121, 122, 131, 132, 133, 134) étant interposée entre les corps colonnaires (121, 122, 131, 132, 133, 134), et l'unité lentille (21, 31) étant fixée aux corps colonnaires (121, 122, 131, 132, 133, 134) par le biais d'une résine adhésive (40) située dans un espace séparant l'unité lentille (21, 31) et chaque corps colonnaire (121, 122, 131, 132, 133, 134),
dans lequel des axes optiques de l'unité lentille (21, 31) et de l'élément optique sont mis en correspondance,
dans lequel chaque corps colonnaire (121, 122, 131, 132, 133, 134) a une forme conique dont la largeur va en rétrécissant en direction de l'espace de façon à guider la lumière ultraviolette émise le long de surfaces de chaque corps colonnaire (121, 122, 131, 132, 133, 134) vers l'espace séparant l'unité lentille (21, 31) et chaque corps colonnaire (121, 122, 131, 132, 133, 134), et
dans lequel la résine adhésive (40) est une résine pouvant durcir à la lumière ultraviolette.
